# EUROPÄISCHE PATENTSCHRIFT

(11) **EP 1 021 380 B1**
(45) Veröffentlichungstag und Bekanntmachung des Hinweises auf die Patenterteilung: **18.07.2001**
(21) Anmeldenummer: 98954376.4
(22) Anmeldetag: 08.10.1998
(51) Int. Cl.: C03B 32/00

(54) **VERFAHREN ZUM VORVERDICHTEN VON FLACHGLAS**
METHOD FOR PRECOMPRESSING FLAT GLASS
PROCEDE POUR PRECOMPRIMER DU VERRE STRATIFIE

(30) Priorität: 10.10.1997 DE 19744666
(43) Veröffentlichungstag der Anmeldung: 26.07.2000
(73) Patentinhaber: Schott Glas, 55122 Mainz (DE); CARL-ZEISS-STIFTUNG trading as Schott Glas, 55122 Mainz (DE)
(72) Erfinder: FOTHERINGHAM, Ulrich, D-65191 Wiesbaden (DE); SPRENGER, Dirk, D-55271 Stadecken-Elsheim (DE); OSTENDARP, Heinrich, D-55128 Mainz (DE); WEGENER, Holger, D-31061 Alfeld (DE); HÖLZEL, Eva, 55270 Ober-Olm (DE); BÜRGEL, Wolfgang, 55126 Mainz (DE)
(74) Vertreter: Fuchs Mehler Weiss & Fritzsche
(86) Internationale Anmeldenummer: EP9806393
(87) Internationale Veröffentlichungsnummer: WO9919265

(56) Entgegenhaltungen:
- DE-A- 3 422 347
- DE-C- 891 916
- US-A- 5 073 181
- US-A- 5 597 395

## Beschreibung

Die Erfindung betrifft ein Verfahren zum Vorverdichten von Flachglasscheiben, insbesondere von Displaygläsern, bei dem auf mindestens einer Platte mindestens eine Flachglasscheibe in einem Ofen einer Wärmebehandlung im Bereich von 300°C bis 900°C unterzogen wird.

Glas ist strukturell amorph, wobei diese amorphe Struktur nicht fest ist, sondern von der thermischen Vorgeschichte abhängt. Sie kann sich auch nach der Herstellung noch ändern, wenn man das Glasprodukt einer thermischen Belastung aussetzt. Mit jeder Änderung der amorphen Struktur ist eine Änderung der bei Raumtemperatur gemessenen Dichte zu höheren oder niedrigeren Werten verbunden. Diese strukturellen Änderungen und die entsprechenden Änderungen der Dichte lassen sich zumindest näherungsweise unter Anwendung bekannter physikalischer Gesetze aus der Temperatur-Zeit-Kurve der thermischen Belastung berechnen (George W. Scherer: Relaxation in Glass and Composites, John Wiley & Sons, Inc. (New York, Chichester, Brisbane, Toronto, Singapore), 1986. Library of Congress Catalog Card Number: 85-17871).

Aus JP-A-08-301628 der Zusammenfassung von ist ein Wärmeleitungsofen bekannt, in dem eine zu erwärmende Glasplatte auf einem Heizblock aufliegt, der mit einer Aluminiumschicht versehen ist, um eine gute Wärmeleitfähigkeit zu gewährleisten. Oberhalb der Glasplatte ist ein weiterer Heizblock beweglich angeordnet, der auf die Glasplatte gedrückt wird. Da die Heizelemente in diesem Heizblock integriert sind, besteht die Gefahr, daß durch unterschiedliche Heizleistungen ein unterschiedlicher und damit schädlicher Wärmeeintrag in die zu behandelnde Glasplatte erfolgt.

Die DE-A1-3 422 347 beschreibt ein Verfahren zum Planieren von Dünngläsern, bei dem ein Glasplattenstapel gebildet wird, der auf mindestens einer Papierlage aufliegt. Auch zwischen den einzelnen Glasplatten sind Papierzwischenlagen vorgesehen. Die untere Papierlage liegt auf einer planen Unterlagsplatte auf, die aus Graphit, Keramik, Glas oder Metall bestehen kann. Der Ausdehnungskoeffizient der Unterlagsplatte soll den gleichen Verlauf haben wie das zu planierende Dünnglas, so daß dicke Glasplatten aus demselben Material bevorzugt werden.

Außer solchen Planierverfahren, die oberhalb des oberen Kühlpunktes durchgeführt werden, gibt es sogenannte Vorverdichtungsverfahren.

Bei einer dem eigentlichen Herstellungsprozeß folgenden Temperaturbehandlung im Temperaturbereich zwischen dem unteren und dem oberen Kühlpunkt (das sind die Temperaturen, bei denen die Viskosität des Glases 10^{14,5} dPas bzw. 10¹³ dPas beträgt) ergibt sich im allgemeinen eine starke, bei niedrigen Temperaturen eine schwache Verdichtung des Materials. Aus den zitierten physikalischen Gesetzen folgt, daß die schwache Verdichtung bei einer niedrigen Temperatur noch schwächer ausfällt, wenn das Glas vorher bei einer höheren Temperatur, vorzugsweise zwischen dem unteren und dem oberen Kühlpunkt vorverdichtet worden ist.

Flachglas, das zur Herstellung von flachen Displays bestimmt ist, muß im allgemeinen stark vorverdichtet ("compaktiert") sein, damit es während der verschiedenen Temperaturbelastungen im Rahmen des weiteren Herstellungsprozesses der Displayscheibe zu keiner nennenswerten weiteren Verdichtung ("Shrinkage") kommt. Diese weitere Verdichtung hätte zur Folge, daß die während der Herstellung des flachen Displays schichtweise aufgetragenen verschiedenen Strukturen nicht wie gewünscht fluchten.

Einen wesentlichen Anteil an den flachen Displays machen die Flüssigkeitskristallbildschirme (LCD's) aus. Die üblichen Prozeßtemperaturen bei deren Herstellung liegen zwischen 200°C und 400°C. Die maximal zulässige Verdichtung des Glassubstrates während des Herstellungsprozesses hängt von der verwendeten Technologie ab. Bei der auf amorphem Silizium beruhenden Dünnschichttransistor-Technik (TFT) darf die Verdichtung höchstens 10 ppm betragen (T. Yukawa, K. Taruta, Y. Shigeno, Y. Ugai, S. Matsumoto, S. Aoki (1991): Recent progress of liquid crystal display devices, In: Science and Technology of new glasses. Eds.: S. Sakka & N. Soga, pp. 71-82, Tokyo, 1991).

Weit verbreitet sind auch flache Plasma-Displays. Deren Herstellungsprozeß beinhaltet unter anderem das Aufbringen von Elektroden, Stegen, Phosphor-und dielektrischen Schichten üblicherweise im Temperaturbereich zwischen 450°C und 600°C. Die Verdichtung der als Substrate verwendeten dünnen Gläser während dieser Prozesse darf maximal 20 ppm betragen.

Unmittelbar nach der Herstellung der Glasscheibe, zum Beispiel durch einen Zieh- oder Floatprozeß, ist das Glas im allgemeinen noch nicht hinreichend vorverdichtet, so daß eine weitere Temperaturbehandlung (Nachtemperung) angeschlossen werden muß.

So beträgt der Schrumpf an einem für Displayanwendungen typischen alkalifreien Glas (z.B. AF 45 der Deutsche Spezialglas AG, Grünenplan) bei einer nachträglichen Temperung von 1 Stunde bei 450°C etwa 50 ppm, wenn das Glas nicht vorverdichtet wurde. Durch eine entsprechende Temperaturbehandlung läßt sich dieser Schrumpf auf Werte < 12 ppm senken.

Bei einem Glas mit einem niedrigeren Kühlpunkt (z.B. Glas D263 der Deutschen Spezialglas AG, Grünenplan) beträgt der Schrumpf unmittelbar nach dem Herstellungsprozeß bei Temperung bei 450°C für 1 h sogar mehr als 300 ppm. Durch eine geeignete Nachtemperung sinkt dieser Wert auf <20 ppm.

Die Nachtemperung wird in einem Chargier- oder in einem Durchlaufofen durchgeführt. Aus ökonomischen Gründen werden die Glasscheiben, meist 10-20 Scheiben (Dicke größenordnungsmäßig 1 mm), dabei zu Stapeln zusammengefaßt. Diese Stapel werden auf eine Trägerplatte gelegt und manchmal mit einer Abdeckplatte beschwert, wofür zum Beispiel Quarzalplatten verwendet werden.

Schwierigkeiten bereitet die Neigung aufgestapelter Glasplatten, bei höheren Temperaturen zu verkleben - wie z.B. zwischen dem unteren und oberen Kühlpunkt. Um dieses Verkleben der Platten zu verhindern, werden zwischen die Glasplatten anorganische Pulverschichten als Trennmittel eingebracht (US-Patent 5,073,181). Nachteilig ist, daß das Pulver die optische Qualität der Scheibenoberfläche beeinträchtigen kann, wenn nicht eine bestimmte Korngröße unterschritten wird.

Schwierigkeiten bereitet ferner die Notwendigkeit, während der Temperung eine möglichst große Temperaturhomogenität innerhalb des gesamten Stapels zu garantieren. Eine Temperaturinhomogenität von Scheibe zu Scheibe (d.h. eine vertikale Temperaturinhomogenität im Stapel) bedeutet je nach Temperaturprogramm, daß die verschiedenen Scheiben verschiedene Temperaturgeschichten durchlaufen und damit unterschiedliche Vorverdichtungen haben.

Für eine einzelne Scheibe stellt ein vertikaler Temperaturgradient im Stapel im allgemeinen kein Problem dar, da die Scheibenhöhe im Verhältnis zur Stapelhöhe gering ist. Anders ist dies für eine laterale Temperaturinhomogenität. Sie bedeutet, je nach Temperaturprogramm, daß die verschiedenen Abschnitte einer Scheibe verschiedene Temperaturgeschichten durchlaufen und damit unterschiedliche Vorverdichtungen haben. Eine laterale Temperaturinhomogenität bedeutet für die einzelne Scheibe aber auch noch, daß sich am Ende der Temperung eine innere Spannung in der Scheibe aufbaut, deren Relaxation bei einer folgenden Temperaturbelastung ihrerseits zu lokalen Volumenänderungen führen kann. Herrscht während der Temperung in der Scheibe ein Temperaturgradient in Scheibenebene, so führt dies beim Temperaturausgleich am Ende der Temperung zu einer Fehlanpassung der verschiedenen Abschnitte der Scheibe. Diese Fehlanpassung wird durch ein gegenseitigen sich-Verspannen der verschiedenen Abschnitte des Glases ausgeglichen. Relaxiert diese Spannung bei einer folgenden Temperaturbelastung, kommt es zu einem sich-Ausdehnen bzw. sich-Zusammenziehen der verschiedenen Abschnitte des Glases.

Solche inhomogenen Volumenausdehnungs- oder Schrumpfungseffekte sind besonders problematisch für den Displayhersteller, weil er sie nicht durch eine geeignete Dimensionierung der Masken bei den nachfolgenden Beschichtungsprozessen ausgleichen kann.

Das Vorhandensein einer gewissen Temperaturinhomogenität ist unvermeidbar. Während der im Temperprozeß zwangsläufig enthaltenen Erwärmung muß Wärme in den Stapel fließen; während der im Temperprozeß genauso zwangsläufig enthaltenen Kühlung muß wiederum Wärme aus dem Stapel herausfließen. Beide Vorgänge beinhalten auch einen inneren Wärmefluß im Stapel, der als Triebkraft einen inneren Temperaturgradienten braucht. Aus geometrischen Gründen (ein typischer Wert für die Stapelhöhe ist 2 cm, wohingegen die seitlichen Abmessungen bis in die Größenordnung 1x1m kommen) ist es vorzuziehen, den Wärmezu- bzw. -abfluß überwiegend senkrecht zur Scheibenebene erfolgen zu lassen. In dieser Richtung genügt ein relativ kleiner Temperaturunterschied, um denselben Temperaturgradienten und damit denselben Wärmefluß zu erreichen, für den man in lateraler Richtung einen sehr großen Temperaturunterschied brauchen würde.

Ein großer lateraler Temperaturunterschied hätte zwei ungünstige Effekte (unterschiedliche Vorverdichtung und Spannungseffekt), wohingegen ein vertikaler Temperaturunterschied nur einen ungünstigen Effekt, nämlich die unterschiedliche Vorverdichtung, hat. Erwünscht ist daher eine möglichst homogene Temperaturverteilung in lateraler Richtung. Der vertikale Temperaturunterschied soll beim Heizen bzw. Kühlen gerade so groß sein, wie es notwendig ist, um den jeweils zur Erwärmung bzw. Abkühlung des Stapels notwendigen Wärmefluß fließen zu lassen. Während einer Phase des isothermen Haltens soll auch der vertikale Temperaturunterschied Null sein.

Die technische Realisierung einer Temperung mit großer Temperaturhomogenität hängt vom fraglichen Temperaturbereich ab. Für die Nachtemperung von Displaygläsern sind dies typischerweise 500°C bis 700°C (der untere und der obere Kühlpunkt von D 263 liegen bei 529°C bzw. 557°C; der untere und der obere Kühlpunkt von AF 45 liegen bei 627°C bzw. 663°C, bei speziellen Gläsern auch 300°C bis 900°C).

Bei großen Temperaturhomogenitätsanforderungen werden Umluftöfen eingesetzt, in denen Luft auf die gewünschte Ofentemperatur erhitzt und im Ofen umgewälzt wird.

Im Falle des Heizens oder Kühlens wird die Luft etwas heißer oder kälter gemacht als die Stapelaußenfläche, um so eine Triebkraft für einen Wärmestrom in den bzw. aus dem Stapel zu erzeugen. Diese Temperaturdifferenz muß überall gleich groß sein, damit nicht durch lokale Unterschiede beim Wärmefluß lokale unterschiedliche Heiz- bzw. Kühlraten und damit entsprechende Temperaturinhomogenitäten erzeugt werden.

Eine Umluftheizung ist aus mehreren Gründen nicht erstrebenswert. Erstens sind mit der Ventilation zusätzliche Kosten verbunden. Zweitens werden durch die Ventilation Trennmittelanteile aus den Zwischenräumen der Glasscheiben herausgelöst und unter Umständen dafür unerwünschte Schmutzteile in die Zwischenräume eingeführt. Dies ist insbesondere bei Displaygläsern, deren weitere Verarbeitung üblicherweise in Reinräumen erfolgt, unerwünscht. Entsprechend ist eine umluftfreie Temperung wünschenswert.

Aus der US-A-5,597,395 ist ein Verfahren zum Vorverdichten bekannt, bei dem die Glasscheiben in einem Ofen bei der Tempertemperatur gleichzeitig einem allseitigen Druck mittels eines Gases ausgesetzt werden.

Aufgabe der Erfindung ist es, ein Verfahren zum Vorverdichten von Flachglasscheiben bereitzustellen, das einfacher und damit kostengünstiger ist und das eine große Temperaturhomogenität im Glas gewährleistet.

Diese Aufgabe wird mit einem Verfahren der eingangs erwähnten Art gelöst, das dadurch gekennzeichnet ist, daß die Wärmebehandlung in einem Strahlungsofen durchgeführt wird, in dem die Flachglasscheibe auf mindestens einer Keramikplatte mit einer Wärmeleitfähigkeit angeordnet wird, die im Bereich der Wärmebehandlungstemperatur mindestens 5 mal so groß ist wie die der zu behandelnden Glasscheibe.

Die Wärmebehandlungstemperatur bzw. der Temperaturbereich wird entsprechend der Glaswerte der zu behandelnden Glasplatte gewählt, wobei die Temperaturen vorzugsweise zwischen dem unteren und dem oberen Kühlpunkt liegen.

Der Einsatz eines Strahlungsofens ist im Vergleich zu einem Umluftofen kostengünstiger, weil die zusätzlichen Kosten für Ventilation usw. entfallen.

Ferner wird beim Einsatz von Trennmitteln dieses nicht aus den Zwischenräumen der Glasscheiben herausgelöst.

Strahlungsöfen wurden bisher im Temperaturbereich von 300°C bis 900°C im allgemeinen nicht eingesetzt, weil in diesem Temperaturbereich der Wärmetransport durch Strahlung im allgemeinen nicht ausreicht, die konstruktiv bedingten Ungleichmäßigkeiten im Ofen, wie z.B. unterschiedliche Leistungseinbringung scheinbar baugleicher Heizkörper, ungleichmäßige Isolation usw., zu überwinden und eine große Temperaturhomogenität im Ofenraum zu erzeugen.

Hierzu kommt ferner, daß Glas eine schlechte Wärmeleitfähigkeit, typischerweise 1 W/(mK) aufweist, wodurch das Auftreten von Temperaturinhomogenitäten im Glas noch verstärkt wird.

Es hat sich herausgestellt, daß diese Nachteile eines Strahlungsofens dadurch kompensiert werden können, daß die mindestens eine Glasscheibe auf mindestens einer Keramikplatte mit einer Wärmeleitfähigkeit angeordnet wird, die im Temperaturbereich, in dem die Wärmebehandlung durchgeführt wird, mindestens 5 mal so groß ist, wie die der zu behandelnden Glasscheibe.

Der Vorteil solcher Keramikplatten besteht darin, daß der Wärmestrom von ihnen übernommen und gleichzeitig auf die große Fläche der Glasscheibe verteilt wird, so daß Temperaturunterschiede in der Scheibenebene ausgeglichen werden. Ein weiterer Vorteil besteht in einem schnellen Wärmezufluß beim Aufheizen und einem schnellen Wärmeabfluß beim Kühlen.

Mit den bisher üblicherweise eingesetzten Quarzalplatten konnten diese Vorteile nicht erreicht werden, weil die Wärmeleitfähigkeit dieses Materials nur in etwa dem der zu behandelnden Glasscheiben entspricht.

Vorzugsweise wird ein Stapel aus Flachglasscheiben auf der Keramikplatte abgelegt und wärmebehandelt. Die Temperaturhomogenität im Glas kann weiter verbessert werden, wenn die Glasscheibe oder der Stapel aus Glasscheiben zwischen mindestens zwei solcher Keramikplatten angeordnet wird.

Vorteilhafterweise werden porenfreie Keramikplatten verwendet, weil solche Platten keine Fremdmaterialien, wie Waschmittelrückstände oder dergleichen aufnehmen können, die während der Wärmebehandlung die Oberfläche der zu behandelnden Glasplatten negativ beeinflussen können.

Vorzugsweise werden Keramikplatten verwendet, die vorteilhafterweise aus SiC bestehen oder SiC aufweisen. Hierunter fallen beispielsweise Platten aus Nitrit-gebundenem SiC und Silizium-infiltriertem SiC, wobei letzteres Material besonders wegen der Porenfreiheit bevorzugt ist.

Der Einsatz dieser Materialien als Brennhilfsmittel ist zwar aus der keramischen Industrie bekannt, wobei dort die Eigenschaften wie hohe Bauteilfestigkeit, hohe Temperaturwechselbeständigkeit und große Formstabilität (kein Kriechen unter thermischer Belastung) ausgenutzt werden. (A. Sonntag: "Verbesserter R-SiC Werkstoff für den zyklischen Gebrauch bei hohen Temperaturen: Halsic-RX", cfi/Ber. DKG 74 (1977) No. 4, S. 199). Zum Beispiel werden Tellerständer für den Glatt- und Dekorbrand angeboten (eine Quelle: AnnaWerk Keramische Betriebe, 96466 Rödental, Material "rekristallisiertes SiC").

Es gibt jedoch im Stand der Technik keinerlei Hinweise darauf, daß diese Keramikmaterialien auch zum Einsatz beim Vorverdichten von Flachglasscheiben geeignet sind, weil andere Eigenschaften des Keramikmaterials im Vordergrund stehen.

Der Einsatz der Keramikmaterialien hat den Vorteil, daß sich ein - relativ zum Glasscheibenstapel gesehen - seitlicher Temperaturunterschied im Ofen (also zum Beispiel zwischen zwei gegenüberliegenden Seitenwänden) im Stapel nur deutlich reduziert bemerkbar macht. Dies gilt überraschenderweise gerade dann, wenn der Wärmeübergang zwischen sich zustrahlenden Flächen im Ofen bei den hier relevanten Tempertemperaturen gering ist.

Es hat sich herausgestellt, daß durch den Einsatz der hochwärmeleitenden Keramik der seitliche Temperaturgradient im Stapel mehr als halbiert werden kann, wenn die Höhe des Glasstapels und die Dicke beider Keramikplatten angepaßt sind.

Vorzugsweise werden Keramikplatten mit einer solchen Dicke verwendet, daß das Verhältnis der gesamten Dicke der Keramikplatten zur Glasstapelhöhe mindestens 1/λ·40·W/(mK) beträgt, wobei λ die Wärmeleitfähigkeit des Keramikmaterials im Bereich der Wärmebehandlungstemperatur ist.

Dieser Sachverhalt wird am nachfolgenden Beispiel verdeutlicht.

Zwischen zwei gegenüberliegenden Seitenwänden des Ofens herrscht beispielsweise ein Temperaturunterschied von 10K. Die Keramikplatten sind so in dem Ofen eingebracht, daß den Ofen-Seitenwänden je eine Keramikplatten-Stirnseite parallel gegenüberliegt und beide Strahlung austauschen. Die Breitseiten der Keramikplatten seien gegen den Ofen isoliert. Die mittlere Temperatur im Ofenraum betrage 500°C. Die Seitenwände des Ofens mögen ebenso wie die Keramikplatten eine Emissivität von Eins haben. Durch die Stirnseiten der Keramikplatten fließt ein Netto-Wärmefluß. Die Wärmeflußdichte beträgt ca. 100 W/(m²K)xΔT', wobei ΔT' der Temperaturunterschied zwischen der jeweiligen Ofen-Seitenwand und der gegenüberliegenden Keramikplatten-Stirnseite ist. Der Ofen sei symmetrisch, so daß ΔT' an beiden Seiten denselben Betrag habe.

Es habe der Glasstapel die Fläche 0,5 x 0,5 m und die Höhe 0,01 m. Jede der Keramikscheiben habe dieselbe Fläche und die Höhe 1 cm. Das Glas und die Keramikplatten mögen gleichermaßen die Emissivität Eins haben. Dann fließt durch die Stirnseiten ein Wärmefluß von 1,5 ^{W}/_{K}•ΔT'. Wegen der schlechten Wärmeleitfähigkeit von Glas - typischerweise 1W/(mK) - wird dieser Wärmestrom überwiegend von den Keramikplatten übernommen. In diesen gilt für den Wärmestrom die Beziehung Wärmestrom gleich 0,8 ^{W}/_{K}•ΔT". Aus der Erhaltung des Wärmestromes und der weiteren Bedingung, daß die Summe aller Temperaturdifferenzen auf dem Weg von einer Seitenwand zur gegenüberliegenden Seitenwand 10K ergeben muß, errechnen sich ΔT' ≈ 2,6 K und ΔT" ≈ 4,8 K. Ohne die Keramikscheiben müßte der Wärmefluß durch die Stirnseiten vom Glas selbst weitertransportiert werden. In diesem gilt die Beziehung Wärmefluß gleich 0,005 ^{W}/_{K}•ΔT". Aus der Erhaltung des Wärmestromes usw. würden ΔT' = 0,033K und ΔT" = 9,934 K folgen. Durch den Einsatz der hochwärmeleitenden Keramik gelingt es also, den seitlichen Temperaturgradienten im Stapel mehr als zu halbieren, wenn die Stapelhöhe und die Dicke beider Keramikscheiben aufeinander abgestimmt sind.

Vorzugsweise wird die Glasscheibe oder der Glasscheibenstapel zwischen mindestens zwei Platten aus Silizium-infiltriertem SiC (SiSiC) angeordnet. Wenn mehrere Keramikplatten zwischen dem Glasstapel und der Ofenwand zum Einsatz kommen sollen, wird vorzugsweise die Silizium-infiltrierte SiC-Platte dem Glasstapel zugewandt, weil das Silizium-infiltrierte Siliziumcarbid den Vorteil besitzt, daß es keine Porosität aufweist, in dem sich Waschmittelrückstände, metallische Stäube und ähnliches absetzen können, die während der Temperung mit der angrenzenden Glasoberfläche reagieren und diese unbrauchbar machen können.

Vorzugsweise werden die Silizium-infiltrierten SiC-Platten einem Feinschliff zur Erzeugung einer Rauhigkeit Rₜₘ ≤ 10 *µ*m, vorzugsweise ≤ 1 *µ*m unterzogen. Dadurch wird verhindert, daß durch das mit der Vorverdichtung beim Tempern einhergehende zwangsläufige Schlupfen des Glases auf dem Silizium-infiltrierten Siliziumcarbid und das durch die unterschiedliche Wärmeausdehnungskoeffizienten verursachte weitere Schlupfen nicht zu optisch beeinträchtigenden Effekten kommt.

Der Einsatz eines Trennmittels, wie es aus der US-A-5,073,181 bekannt ist, beeinflußt die Temperaturhomogenität im Stapel nachhaltig. Die vertikale Wärmeleitfähigkeit ist ein gewichtetes Mittel der Wärmeleitfähigkeit des Glases und der des Pulvers - typischer Wert 0,1W/(mK). Haben die Pulverschichten eine Dicke von beispielsweise 1/10 der Glasscheibendicke, ergibt sich das gewichtete Mittel zu 0,5W/(m·K). Durch das Pulver ergibt sich somit eine Erhöhung der Temperaturinhomogenität im Stapel. Um die Temperaturhomogenität weiter zu verbessern, hat es sich überraschend herausgestellt, daß die Glasscheibenstapel auch ohne Trennmittel getempert werden können, wenn die Scheiben vorher einem chemischen Prozeß unterworfen werden. Diese chemische Behandlung umfaßt vorzugsweise mehrere Schritte.

In der ersten Stufe des Behandlungsprozesses wird das Glas in eine Lauge mit einem pH-Wert über 10 eingetaucht. Danach erfolgt eine Behandlung mit destilliertem Wasser. Anschließend kann eine weitere Stufe mit einem vorzugsweise sauren Medium (pH < 4) folgen, das zusätzlich Tenside enthalten kann, sowie eine erneute Spülung mit destilliertem Wasser. Die letzte Oberflächenbehandlung besteht aus einer Spülung mit destilliertem Wasser, vorzugsweise in einer Kaskadenspülung. Das destillierte Spülwasser unterliegt vorzugsweise einer Partikelfilterung bis 1 *µ*m Durchmesser. Der spezifische Widerstand des destillierten Spülwassers beträgt vorzugsweise > 1 MOhm, beispielsweise 18 MOhm. In den verschiedenen Bädern können sich zusätzlich Ultraschallmodule befinden. Die Temperaturen werden vorteilhafterweise zwischen 40°C und 80°C eingestellt. Abschließend werden die Scheiben getrocknet. Hierzu empfiehlt sich eine Trocknung, deren Leistung durch die Temperatur und den Umluftstrom so geregelt werden muß, daß nach Abschluß der Trocknung die Scheibe nicht nur eine nicht feuchte Oberfläche aufweist, sondern auch keine signifikanten Mengen von kondensierter Restfeuchte auf der mikroskopischen Oberfläche vorhanden sind. In Kombination mit einer Partikelfilterung der Luft und Maßnahmen zur Vermeidung von statischer Aufladung während des Trocknens müssen die Scheiben im Anschluß an den Trocknungsvorgang so gestapelt werden, daß keine Partikelkontaminationen zwischen die Scheiben gebracht werden.

Anhand von Beispielen wird das erfindungsgemäße Verfahren nachfolgend näher erläutert.

### Bereitstellung SiSiC

Zur Temperung wurden SiSiC-Platten in den Maßen 540*420*6 mm³ verwendet, die über das Schlickergußverfahren mit nachträglicher Si-Infiltration hergestellt wurden.

Die Oberfläche wurde mit 200er Korn SiSiC auf einer Metallschleifscheibe geschliffen, bis eine Oberflächenrauhigkeit von max 5 *µ*m bei einer Planität von 60 *µ*m über die Diagonale erreicht wurde. Die Platten wiesen keine angeschliffenen Blasen nach dem Schleifen größer als 10 *µ*m auf. Nach dem Schleifvorgang wurden die Platten über 24 h in einer 6 molaren HCl-Lösung gelagert und anschließend abgewaschen.

### Chemische Behandlung Glastyp AF45

Um den Glastyp AF45 trennmittelfrei zu Tempern, wurde das Glas einer Dicke von 1,1 mm auf ein Format von 320*320 mm gebracht. Zum Behandlungsprozeß wurde das Glas in einem Edelstahlgefäß an den Seiten und am Boden durch Teflonrippen gehalten. Der Abstand wurde so gewählt, daß das Glas nicht unter Spannung stand. Behandelt wurde das Glas in einer Reinigungsanlage, deren erstes Becken mit einem Bad mit einem pH-Wert von 12 gefüllt war. Das Glas wurde bei einer Temperatur von 50°C für 5 Minuten im Becken belassen. Anschließend wurde der Korb mit dem Glas in ein Spülbecken mit destilliertem Wasser gebracht und dort ca. 3 Minuten belassen, bis der Leitwert unter einem Wert von 1 *µ*S lag, so daß der Korb in das Säurebecken transportiert werden konnte. Der pH-Wert wurde auf 2 eingestellt, und das Glas wurde bei einer Temperatur von 50°C für 5 Minuten im Becken belassen.

Anschließend wurde der Korb erneut in ein Spülbecken mit destilliertem Wasser gebracht und dort wiederum bis zu einem Leitwert von 1 *µ*S gespült. Zum Abschluß erfolgte eine Reinigung in einem durch Umkehrosmose und Elektroentionisierungsverfahren hergestelltem Reinstwasser bis zum Leitwert 0,5 *µ*S. In diesem Becken ist ein Partikelfilter von 10 *µ*m implementiert.

Während der Behandlung wurde der Korb in allen Becken kontinuierlich um 6 cm nach oben und unten bewegt. In allen Becken mit Ausnahme der Spülbecken wurde Ultraschall eingesetzt. Dieselbe Behandlung wurde auch für Glas der Dicke 1,9 mm durchgeführt. Die Trocknung erfolgte bei 200°C für 20 Minuten.

### Chemische Behandlung Glastyp D263

Gläser vom Typ D263 wurden bei einer Dicke von 1,1 mm auf ein Format von 340*360 mm² gebracht. Zum Behandlungsprozeß wurde das Glas in einem Edelstahlgefäß an den Seiten und am Boden durch Schlitze in einem Teflonband vertikal gehalten. Behandelt wurde das Glas in einer automatisierten Reinigungsanlage, die in einem Reinraum stand. Hierzu wurde der Korb von einer Ablage aufgenommen und zum ersten Becken transportiert.

Das Bad besaß einen pH-Wert von 12, und das Glas wurde bei einer Temperatur von 60°C für 5 Minuten im Becken belassen. Anschließend wurde der Korb in ein Spülbecken mit destilliertem Wasser gebracht, dort 5 Minuten belassen und danach in das Säurebecken transportiert. Der pH-Wert wurde auf 2 eingestellt, und das Glas wurde bei einer Temperatur von 60°C für 5 Minuten im Becken belassen.

Anschließend wurde der Korb erneut in ein Spülbecken mit destilliertem Wasser gebracht und dort 5 Minuten belassen. Zum Abschluß erfolgte eine Reinigung in einem Kaskadenbecken (3fach mit je 5 Minuten) bis zu einem gemessenen Leitwert von 0,05 *µ*S. In diesem Becken war eine Partikelfilterung von 5 *µ*m integriert. Die Temperatur in dem destillierten Wasser im Spülbecken und im Kaskadenbecken belief sich auf 60°C. Im letzten Becken wurde der Korb mit einem Aushebemechanismus mit 1 cm pro Sekunde langsam nach oben bewegt. Die Trocknung erfolgte in einem Trockenmodul mit Hochleistungsschwebstoffilter Reinraumklasse 100 für 8 Minuten bei einer Temperatur von 120°C.

Im Anschluß wurden die Scheiben im Reinraum verpackt und erschütterungssicher transportiert.

### Temperung

Zum Stapeln wurden die Scheiben in einem laufend mit gefilterter Luft gespülten Kasten (Flowbox) positioniert. Die SiSiC-Platten wurden mit Ethanol gereinigt und danach neben die Scheiben ebenfalls in der Flowbox abgelegt. Die Scheiben wurden mit Kunststoffhandschuhen am Rande angepackt und zu einem 10er-Stapel auf einer SiSiC-Platte (geschliffene Seite nach oben) aufeinandergestapelt. Abschließend wurde eine geschliffene SiSiC-Platte mit der geschliffenen Seite nach unten auf die oberste Scheibe gelegt. Das so zusammengesetzte "Sandwich" wurde in einem Strahlungsofen positioniert, der durch 5 Regelzonen eine große Temperaturhomogenität ermöglicht. Zur Kontrolle wurden mehrere S-Thermoelemente (Pt/PtRh10; Thermoelemente, in denen die Thermospannung durch das Metallpaar Platin (rein)/Platin mit 10 % Rhodium legiert erzeugt wird) an dem Glasstapel positioniert. Die dort gemessene Temperaturinhomogenität in Z-Richtung und in X,Y-Richtung überschritt einen Wert von ± 3K während der Temperung nicht. Ausgehend von Raumtemperatur wurde das Glas mit einer Heizrate von 300°/h auf Tₘₐₓ erwärmt. Nach einer Verweilzeit Tₕₐₗₜ wurde das Glas dann nach einer hinsichtlich Struktur- und Spannungsrelaxation optimierten Kühlkurve bis auf RT abgekühlt.

### Schrumpf bei einer späteren Temperaturbelastung (Compaction)

Für die Messung der Compaction wurden die Scheiben vor der späteren Temperaturbelastung mit einem Raster aus eingeritzten Markierungskreuzen im Abstand von 100 mm versehen. Die Abstände aller benachbarten Markierungen wurden vor und nach der späteren Temperaturbelastung mit einer Koordinatenmeßmaschine vermessen. Die Temperaturbelastung für D 263 betrug 1h, 450°C, Aufheiz- und Kühlrate 5K/min. Die Temperaturbelastung für AF 45 betrug 1h, 590°C, Aufheiz- und Kühlrate 6K/min. Aus jedem Stapel wurden drei Scheiben (eine aus der Mitte, die zweitoberste und die zweitunterste) der Compactionmessung zugeführt. Die Temperaturbelastung wurde dabei im selben Ofen und unter denselben Temperaturhomogenitätsrandbedingungen durchgeführt wie oben.

### Es ergaben sich folgende Ergebnisse:

**Tab.:**

| Δl/l [ppm] für D 263 und AF 45 Gläser nach einer zusätzlichen Temperaturbehandlung, gemessen für je 3 Glassheiben. | | | |
|---|---|---|---|
| Glas-Typ | Scheiben Nr. | | |
| | 1 | 2 | 3 |
| D 263 | -1 ± 3 | 1 ± 2 | 3 ± 3 |
| AF 45 | 0 ± 3 | 2 ± 5 | 1 ± 4 |

## Patentansprüche

1. Verfahren zum Vorverdichten von Flachglasscheiben, insbesondere von Displaygläsern, bei dem auf mindestens einer Platte mindestens eine Flachglasscheibe in einem Ofen einer Wärmebehandlung im Bereich von 300°C bis 900°C unterzogen wird, **dadurch gekennzeichnet,**
daß die Wärmebehandlung in einem Strahlungsofen durchgeführt wird,
in dem die Flachglasscheibe auf mindestens einer Keramikplatte mit einer Wärmeleitfähigkeit aufliegt, die im Bereich der Wärmebehandlungstemperatur mindestens 5 mal so groß ist wie die der zu behandelnden Glasscheibe.

2. Verfahren nach Anspruch 1, **dadurch gekennzeichnet,** daß ein Stapel aus Flachglasscheiben zwischen mindestens zwei Keramikplatten angeordnet wird.

3. Verfahren nach Anspruch 1 oder 2, **dadurch gekennzeichnet,** daß porenfreie Keramikplatten verwendet werden.

4. Verfahren nach einem der Ansprüche 1 bis 3, **dadurch gekennzeichnet,** daß Keramikplatten verwendet werden, die aus SiC bestehen oder SiC aufweisen.

5. Verfahren nach einem der Ansprüche 1 bis 4, **dadurch gekennzeichnet,** daß Keramikplatten mit einer solchen Dicke verwendet werden, daß das Verhältnis der gesamten Dicke der Keramikplatten zur Glasstapelhöhe mindestens 1/λ·40W/(mK) beträgt, wobei λ die Wärmeleitfähigkeit des Keramikmaterials im Bereich der Wärmebehandlungstemperatur ist.

6. Verfahren nach einem der Ansprüche 1 bis 5, **dadurch gekennzeichnet,** daß mindestens zwei Platten aus Silizium-infiltriertem SiC verwendet werden.

7. Verfahren nach Anspruch 6, **dadurch gekennzeichnet,** daß die Silizium-infiltrierten SiC-Platten dem Glasstapel zugewandt werden.

8. Verfahren nach einem der Ansprüche 1 bis 7, **dadurch gekennzeichnet,** daß bei Verwendung von Silizium-infiltrierten SiC-Platten diese einem Feinschliff zur Erzeugung einer Rauhigkeit Rₜₘ ≤ 10 *µ*m, vorzugsweise ≤ 1 *µ*m unterzogen werden, bevor sie mit dem Glasscheibenstapel zusammengebracht werden.

9. Verfahren nach einem der Ansprüche 1 bis 8, **dadurch gekennzeichnet,** daß die Glasscheiben vor dem Zusammenfügen zu einem Stapel einer chemischen Behandlung unterzogen werden.

10. Verfahren nach Anspruch 9, **dadurch gekennzeichnet,** daß die chemische Behandlung folgende Schritte umfaßt:
- Eintauchen in eine Lauge mit einem pH-Wert > 10,
- Behandlung mit destilliertem Wasser,
- Behandlung mit einem sauren Medium mit einem pH-Wert <4, wobei das saure Medium Tenside enthalten kann,
- Spülung mit destilliertem Wasser,
- Trocknung der Glasscheiben.

11. Verfahren nach Anspruch 10, **dadurch gekennzeichnet,** daß das destillierte Spülwasser einer Partikelfilterung bis 1 *µ*m unterliegt.

12. Verfahren nach Anspruch 10 oder 11, **dadurch gekennzeichnet,** daß der spezifische Widerstand des destillierten Spülwassers > 1 MOhm beträgt.

13. Verfahren nach einem der Ansprüche 10 bis 12, **dadurch gekennzeichnet,** daß die Temperaturen der verwendeten Flüssigkeiten zwischen 40°C und 80°C liegen.

## Claims

1. Method for precompressing flat glass panes, especially display glasses, in which at least one flat glass pane on at least one panel is subjected to a heat treatment in a furnace in the range from 300° to 900°C, characterized in that the heat treatment is carried out in a radiation furnace, in which the flat glass pane is disposed on at least one ceramic panel with a thermal conductivity which, in the heat- treatment temperature range, is at least 5 times as great as that of the glass pane which is to be treated.

2. Method according to Claim 1, characterized in that a stack of flat glass panes is arranged between at least two ceramic panels.

3. Method according to Claim 1 or 2, characterized in that pore-free ceramic panels are used.

4. Method according to one of Claims 1 to 3, characterized in that ceramic panels which consist of SiC or contain SiC are used.

5. Method according to one of Claims 1 to 4, characterized in that ceramic panels are used having a thickness which is such that the ratio of the total thickness of the ceramic panels to the height of the glass stack is at least 1/λ/·40W/(mK), λ being the thermal conductivity of the ceramic material in the heat-treatment temperature range.

6. Method according to one of Claims 1 to 5, characterized in that at least two panels of silicon-infiltrated SiC are used.

7. Method according to Claim 6, characterized in that the silicon-infiltrated SiC panels face the glass stack.

8. Method according to one of Claims 1 to 7, characterized in that when silicon infiltrated SiC panels are used, the latter are subjected to a precision grinding in order to produce a roughness Rₜₘ ≤ 10 *µ*m, preferably ≤ 1 *µ*m, before they are brought together with the stack of glass panes.

9. Method according to one of Claims 1 to 8, characterized in that the glass panes are subjected to a chemical treatment before they are assembled into a stack.

10. Method according to Claim 9, characterized in that the chemical treatment comprises the following steps:
- immersion in an alkaline solution having a pH 10,
- treatment with distilled water,
- treatment with an acidic medium having a pH < 4, the acidic medium possibly containing surfactants,
- rinsing with distilled water,
- drying the glass panes.

11. Method according to Claim 10, characterized in that the distilled rinsing water is subjected to a particle filtration down to 1 *µ*m.

12. Method according to Claim 10 or 11, characterized in that the resistivity of the distilled rinsing water is > 1 Mohm.

13. Method according to one of Claims 10 to 12, characterized in that the temperatures of the liquids used are between 40°C and 80°C.

## Revendications

1. Procédé de pré-compression de vitres de verre plat, en particulier de verres pour appareils d'affichage, dans lequel on soumet au moins une vitre de verre plat sur au moins une plaque dans un four à un traitement thermique dans la plage de 300°C à 900°C, caractérisé en ce que le traitement thermique est réalisé dans un four à rayonnement, dans lequel la vitre de verre plat est appliquée sur au moins une plaque céramique ayant une conductibilité thermique qui, dans la plage des températures de traitement thermique, est au moins cinq fois aussi grande que celle de la vitre de verre à traiter.

2. Procédé selon la revendication 1, caractérisé en ce que l'on dispose une pile de vitres de verre plat entre au moins deux plaques céramiques.

3. Procédé selon la revendication 1 ou 2, caractérisé en ce qu'on utilise des plaques céramiques exemptes de pores.

4. Procédé selon l'une quelconque des revendications 1 à 3, caractérisé en ce qu'on utilise des plaques céramiques qui sont constituées de SiC ou présentent du SiC.

5. Procédé selon l'une quelconque des revendications 1 à 4, caractérisé en ce qu'on utilise des plaques céramiques d'une épaisseur telle que le rapport de l'épaisseur totale des plaques céramiques à la hauteur de la pile de vitres de verre soit d'au moins 1/λ·40 W/(mK), où λ est la conductibilité thermique du matériau céramique dans la plage de températures de traitement thermique.

6. Procédé selon l'une quelconque des revendications 1 à 5, caractérisé en ce qu'on utilise au moins deux plaques de SiC infiltrées de silicium.

7. Procédé selon la revendication 6, caractérisé en ce que les plaques de SiC infiltrées de silicium font face à la pile de vitres de verre.

8. Procédé selon l'une quelconque des revendications 1 à 7, caractérisé en ce que, lors de l'utilisation de plaques de SiC infiltrées de silicium, celles-ci sont soumises à un polissage fin pour produire une rugosité Rₜₘ ≤ 10 µm, de préférence ≤ 1 µm, avant qu'elles ne soient assemblées avec la pile de vitres de verre.

9. Procédé selon l'une quelconque des revendications 1 à 8, caractérisé en ce que les vitres de verre sont soumises à un traitement chimique avant d'être assemblées en pile.

10. Procédé selon la revendication 9, caractérisé en ce que le traitement chimique comprend les étapes suivantes :
- immersion dans une lessive ayant une valeur de pH > 10,
- traitement à l'eau distillée,
- traitement avec un milieu acide ayant une valeur de pH < 4, le milieu acide pouvant contenir des agents tensioactifs,
- rinçage à l'eau distillée,
- séchage des vitres de verre.

11. Procédé selon la revendication 10, caractérisé en ce que l'eau de rinçage distillée est soumise à un filtrage de particules jusqu'à 1 µm.

12. Procédé selon la revendication 10 ou 11, caractérisé en ce que la résistance spécifique de l'eau de rinçage distillée est supérieure à 1 Mohm.

13. Procédé selon l'une quelconque des revendications 10 à 12, caractérisé en ce que les températures des liquides utilisés se situent entre 40°C et 80°C.
